(19) Europäisches Patentamt
European Patent Office
Office européen des brevets

(11) EP 1 168 371 A1

(12) **EUROPEAN PATENT APPLICATION**
published in accordance with Art. 158(3) EPC

(43) Date of publication:
**02.01.2002 Bulletin 2002/01**

(21) Application number: **99910729.5**

(22) Date of filing: **26.03.1999**

(51) Int Cl.7: **G21D 3/08**, G21D 1/00

(86) International application number:
**PCT/JP99/01560**

(87) International publication number:
**WO 00/58974 (05.10.2000 Gazette 2000/40)**

(84) Designated Contracting States:
**DE SE**

(71) Applicant: **Hitachi, Ltd.**
**Chiyoda-ku, Tokyo 101-8010 (JP)**

(72) Inventors:
- **WADA, Yooichi**
  **Hitachi-shi, Ibaraki 319-1221 (JP)**
- **UCHIDA, Shunsuke**
  **Hitachi-shi, Ibaraki 319-1221 (JP)**
- **WATANABE, Atsushi**
  **Hitachi-shi, Ibaraki 319-1221 (JP)**
- **ANZAI, Hideya**
  **Hitachi-shi, Ibaraki 319-1221 (JP)**
- **SAKAI, Masanori, Hitachi, Ltd.**
  **Hitachi-shi, Ibaraki319-122 1 (JP)**
- **AKAMINE, Kazuhiko, Hitachi, Ltd.**
  **Hitachi-shi, Ibaraki 317-0073 (JP)**
- **YAMAMOTO, Michiyoshi, Hitachi, Ltd.**
  **Hitachi-shi, Ibaraki 317-0073 (JP)**
- **NAKAMURA, Masato, Hitachi, Ltd.**
  **Hitachi-shi, Ibaraki 317-0073 (JP)**

(74) Representative: **Beetz & Partner Patentanwälte**
**Steinsdorfstrasse 10**
**80538 München (DE)**

(54) **METHOD OF OPERATING REACTOR**

(57) An object of the present invention is to provide a method of operating a nuclear reactor, which is capable of effectively suppressing the initiation and growth of SCC of reactor structural members of a BWR without increasing the dose rate of a main steam system and thereby reducing radioactivity of reactor water, by carrying out, at a suitable period, a control for injecting hydrogen in the reactor water while adjusting the pH of the reactor water on the alkali side.

According to a first invention, the pH at room temperature of reactor water is controlled in a range of 8.5 < pH ≦ 9 at the beginning stage of start-up operation of one operating cycle, and then controlled in a range of 7 < pH ≦ 8.5 until shutdown operation; and the hydrogen concentration of the reactor water is controlled in a range of 30 to 100 ppb throughout the operating cycle.

FIG.1

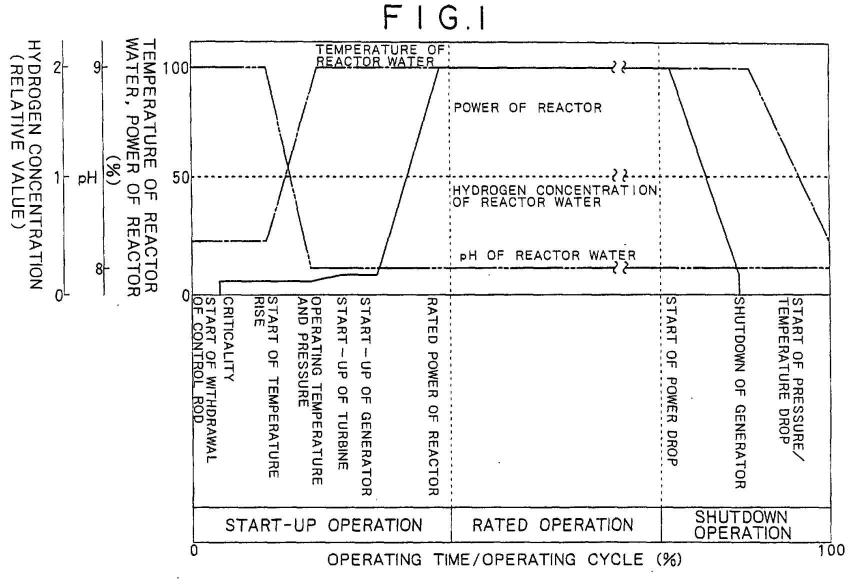


EP 1 168 371 A1

## Description

### BACKGROUND OF THE INVENTION

The present invention relates to a method of operating a boiling water reactor (hereinafter, referred to as "BWR"), and particularly to a method of operating the reactor (nuclear reactor) while injecting hydrogen in the reactor.

In operation of a BWR, hydrogen injection has been adopted for suppressing the initiation and growth of stress corrosion cracking (hereinafter, referred to as "SCC") of structural materials at a lower portion of a reactor pressure vessel. Such hydrogen injection has been heretofore carried out in several domestic/foreign plants.

A first prior art method relating to hydrogen injection has been described in Japanese Patent Laid-open No. Hei 4-274800, which is intended to suppress corrosion of reactor materials and reduce the dose rate of a main steam system by injecting hydrogen and an alkali material in a reactor primary cooling system. The document also described that the release rate of radioactive nitrogen from a liquid phase to a gas phase is reduced by injecting an alkali material so as to shift the pH of a liquid phase on the alkali side.

A second prior art method has been described in Japanese Patent Laid-open No. Hei 7-287094, in which SCC is suppressed with less injected amount of hydrogen by injecting hydrogen and an alkali material in reactor water under a condition in which the pH of the reactor water is in a range of 6 to 10 and the concentration of dissolved oxygen (hereinafter, referred to simply as "oxygen concentration") in the reactor water is 150 ppb. According to the above document, the range of the pH for obtaining the effect of suppressing SCC is as follows: namely, the pH is in a range of 6 to 10 at the oxygen concentration of 50 ppb; in a range of 7 to 10 at the oxygen concentration of 100 ppb; and in a range of 8 to 9 at the oxygen concentration of 150 ppb.

A third prior art method has been described in Japanese Patent Laid-open No. Hei 8-297195, in which the corrosion of the materials of the reactor components being in contact with reactor cooling water is suppressed by injecting hydrogen and Zn in the reactor cooling water, thereby adjusting the pH of reactor water.

A fourth prior art method has been described in Japanese Patent Laid-open No. Hei 9-264988, in which the growth of a crack formed in a metal member in reactor water is reduced by injecting a buffer agent such as boric acid, thereby changing the pH of high temperature water in the crack in a range of 6.0 to 8.0.

The first, second and third prior art methods describe the technique in which the pH of reactor water is adjusted on the alkali side and hydrogen is injected; however, they do not examine a period in which these controls are carried out. Further, the fourth prior art method does not examine a period in which the control of the pH of reactor water is carried out, and also does not examine the combination of the pH of reactor water and hydrogen injection.

To be more specific, according to the above-described prior art methods, although it is intended to suppress the initiation and growth of SCC by adjusting the pH of reactor water on the alkali side and injecting hydrogen, it fails to effectively suppress the initiation and growth of SCC by adjusting the pH of reactor water on the alkali side and injecting hydrogen while examining a suitable period in which these controls should be carried out.

### SUMMARY OF THE INVENTION

An object of the present invention is to provide a method of operating a reactor (nuclear reactor), which is capable of effectively suppressing the initiation and growth of SCC of reactor structural members of a BWR without increasing the dose rate of a main steam system and thereby reducing radioactivity of reactor water, by carrying out, at a suitable period, a control for injecting hydrogen in the reactor water while adjusting the pH of the reactor water on the alkali side.

According to a first invention, there is provided a method of operating a reactor, in which a boiling water reactor is operated while a pH of reactor water in the reactor is controlled on an alkali side and hydrogen is injected in the reactor water, characterized in that: a pH at room temperature of the reactor water is controlled at a relatively high level in a range of $8.5 < pH \leqq 9$ at the beginning stage of start-up operation of one operating cycle, and then controlled at a relatively low level in a range of $7 < pH \leqq 8.5$ until shutdown operation; and a hydrogen concentration of the reactor water is controlled in a range of 30 to 100 ppb throughout the operating cycle.

According to a second invention, there is provided a method of operating a reactor, in which a boiling water reactor is operated while a pH of reactor water in the reactor is controlled on an alkali side and hydrogen is injected in the reactor water, characterized in that: a pH at room temperature of the reactor water is controlled at a relatively high level in a range of $8.5 < pH \leqq 9$ at the beginning stage of start-up operation of one operating cycle, and then controlled at a relatively low level in a range of $7 < pH \leqq 8.5$ until shutdown operation; and a hydrogen concentration of the reactor water is controlled in a range of 30 to 100 ppb in most of the operating cycle excluding a short period upon rated operation, and is increased to a value in a range of 100 to 200 ppb in the short period upon rated operation.

According to a third invention, there is provided a method of operating a reactor, in which a boiling water reactor is operated while a pH of reactor water in the reactor is controlled on an alkali side and hydrogen is injected in the reactor water, characterized in that: a pH at room temperature of the reactor water is controlled in a range of 7 < pH ≦ 8.5 throughout one operating cycle; and a hydrogen concentration of the reactor water is controlled in a range of 30 to 100 ppb in most of the operating cycle excluding a short period upon rated operation, and is increased to a value in a range of 100 to 200 ppb in the short period upon rated operation.

According to a fourth invention, there is provided a method of operating a reactor, in which a boiling water reactor is operated while a pH of reactor water in the reactor is controlled on an alkali side and hydrogen is injected in the reactor water, characterized in that: a pH at room temperature of the reactor water is controlled at a relatively high level in a range of 7 < pH ≦ 9 at the beginning stage of start-up operation of one operating cycle, and then controlled at a relatively low level in the range until shutdown operation; and a hydrogen concentration of the reactor water is controlled in a range of 30 to 100 ppb throughout the operating cycle.

According to a fifth invention, there is provided a method of operating a reactor, in which a boiling water reactor is operated while a pH of reactor water in the reactor is controlled on an alkali side and hydrogen is injected in the reactor water, characterized in that: a pH at room temperature of the reactor water is controlled at a relatively high level in a range of 7 < pH ≦ 9 at the beginning stage of start-up operation of one operating cycle, and then controlled at a relatively low level in the range until shutdown operation; and a hydrogen concentration of the reactor water is controlled in a range of 30 to 100 ppb in most of the operating cycle excluding a short period upon rated operation, and is increased to a value in a range of 100 to 200 ppb in the short period upon rated operation.

The recombination reaction accompanied by hydrogen injection will be described below. When injected in reactor water, hydrogen is recombined with oxygen and hydrogen peroxide at a downcomer portion around the core of a reactor. The recombination reaction is readily accelerated with the aid of a reactive radical such as OH, which is produced by radiation exposure and acts as a catalyst.

With such recombination reaction, the concentrations of oxygen and hydrogen peroxide in a recirculation system on the downstream side from the downcomer portion and in a lower plenum of a reactor pressure vessel are reduced. The reduction in concentrations of oxygen and hydrogen peroxide leads to lowering of an electrochemical corrosion potential (ECP) of a reactor structural member.

Since the hydrogen injection effect of each portion in the reactor is determined depending on the hydrogen concentration at the downcomer portion, the following converted hydrogen concentration, defined as an effective hydrogen concentration, on the basis of the hydrogen concentration at the core (hydrogen concentration at the downcomer portion) $[H_2]_{eff}$ should be adopted.

$$[H_2]_{eff} = \text{(hydrogen concentration of feedwater) (flow rate of feedwater)/(core flow rate)}$$

The present inventors have analytically found that, in the case where the pH of reactor water is controlled on the alkali side, the recombination reaction by hydrogen injection is accelerated more than that in the case where the reactor water is kept neutral. The new knowledge will be described with reference to Fig. 9. Fig. 9 shows an analyzed result of a relationship between a hydrogen concentration of feedwater and an effective oxygen concentration of reactor water in the case where the pH at room temperature (hereinafter, referred to simply as "pH") of the reactor water is changed in a range of 7 to 9.

The oxygen concentration actually measured contains not only the concentration of originally existing oxygen but also the concentration of oxygen produced by decomposition of hydrogen peroxide. Accordingly, the following effective oxygen concentration $[O_2]_{eff}$ is used as the measurable oxygen concentration.

$$[O_2]_{eff} = \text{(concentration of oxygen)} + \text{(concentration of hydrogen peroxide)}/2$$

If the pH of reactor water in an actual BWR is not controlled, the pH of the reactor water becomes about 7. As shown in Fig. 9, the effective oxygen concentration of reactor water becomes small with an increase in hydrogen concentration of feedwater. The effective oxygen concentration of the reactor water at the pH = 8 is slightly lower than that at the pH = 7. The effective oxygen concentration of the reactor water at the pH = 9 is significantly lower than that at the pH = 7, particularly, when the hydrogen concentration of the feed water is 0.3 ppm or more.

From previous knowledge, the initiation and growth of SCC of stainless steel forming reactor structural members is suppressed when the effective oxygen concentration becomes 20 ppb or less. Fig. 9 shows that when the hydrogen concentration of the feed water becomes 0.3 ppm or more, the effective oxygen concentration becomes 20 ppb or less. As a result of examining the effective oxygen concentration with the pH taken as a parameter, it becomes apparent that the effective oxygen concentration of the reactor water in a range of 8.5 < pH ≦ 9 is significantly lower than that at the pH = 7.

Accordingly, in the first and second inventions, since the pH at room temperature of the reactor water is controlled in the range of 8.5 < pH ≦ 9 at the beginning stage of start-up operation in one operational cycle and then controlled in the range of 7 < pH ≦ 8.5 until shutdown operation, it is possible to effectively reduce the effective oxygen concentration of the reactor water, thereby effectively suppressing the initiation and growth of SCC. Even in the fourth and fifth inventions, the same effect can be obtained by selecting the relatively higher and lower levels of the pH at room temperature of the reactor water at suitable values.

The reason why the effect of reducing the effective oxygen concentration is obtained will be described. The recombination reaction by hydrogen injection occurs as follows:

$$O_2 + 2H_2 \rightarrow 2H_2O \qquad \text{(reaction formula 1)}$$

$$H_2O_2 + H_2 \rightarrow 2H_2O \qquad \text{(reaction formula 2)}$$

In the case of the reactor water having a neutral quality (pH = 7), the reaction formula 2 expressing the recombination reaction of hydrogen peroxide is slower than the reaction formula 1 expressing the recombination reaction of oxygen. Accordingly, hydrogen peroxide at a low concentration exists in the reactor water upon hydrogen injection.

When the pH is shifted on the alkali side, in the following equilibrium reaction, the dissociation of hydrogen peroxide to the right side proceeds, and thereby the concentration of $HO_2^-$ is increased.

$$H_2O_2 = HO_2^- + H^+ \qquad \text{(reaction formula 3)}$$

At this time, $HO_2^-$ produces $HO_2$ via the following reaction.

$$HO_2^- + OH \rightarrow HO_2 + OH^- \qquad \text{(reaction formula 4)}$$

The reaction rate constant of the reaction expressed by the above reaction formula is two figures larger than the reaction of hydrogen peroxide with OH or H. As a result, in the water in which the pH is shifted on the alkali side, since the generation rate of $HO_2$ is faster than that in the water having a neutral quality, the recombination efficiency becomes higher.

Accordingly, the recombination reactions of oxygen and hydrogen peroxide with hydrogen in reactor water are accelerated by the combination of hydrogen injection and shifting of the pH on the weak alkali side, so that a recombination effect larger than that in the case of only hydrogen injection (pH = 7) can be obtained. With such an effect of accelerating the recombination reaction, it is possible to reduce the injected amount of hydrogen (hydrogen concentration) necessary for reducing the effective oxygen concentration of reactor water.

On the other hand, upon hydrogen injection, the transition amount of $^{16}N$ (radioactive nitrogen) in steam becomes large with an increase in injected amount of hydrogen, with a result that the dose rate of a main steam system is raised. Also, when the pH at room temperature of reactor water is excessively increased (for example, more than 9), the mass of a radioactive material such as $^{24}Na$ in the reactor water is increased and is entrapped in steam, with a result that the dose rate of the main steam system is raised. Further, in such a high pH condition, there is a possibility of acceleration of corrosion of a fuel cladding tube.

On the contrary, according to the first and second inventions, since the pH at room temperature of reactor water is controlled in a weak alkali range (7 < pH ≦ 9), the necessary injected amount of hydrogen (hydrogen concentration) can be reduced, with a result that the dose rate of a main steam system can be made smaller than that in the case of hydrogen injection not combined with shifting of the pH on the weak alkali side.

In particular, upon start-up operation, since the temperature of reactor water is low and thereby steam is little generated, even if the pH at room temperature of the reactor water is set at a high level in a range of 8.5 < pH ≦ 9, a radioactive material in the reactor water is little shifted to a main steam system via steam. When the pH at room temperature of reactor water is set at a high level, the effect of accelerating the recombination reaction by hydrogen injection becomes significantly large. To be more specific, when the pH at room temperature of reactor water is set at a high level at the beginning stage of start-up operation, it is possible to effectively accelerate the recombination reaction without increasing the dose rate of a main steam system, and hence to effectively suppress the initiation and growth of SCC.

Further, according to the second, third, and fifth inventions, since the hydrogen concentration of reactor water is controlled in the range of 30 to 100 ppb in most of a period of an operating cycle excluding a short period upon rated operation and is increased to a value in the range of 100 to 200 ppb for the short time upon rated operation, it is possible to accelerate the recombination reaction by hydrogen injection for the short period upon rated operation, and hence to effectively suppress the initiation and growth of SCC.

In this case, the dose rate of the main steam system is increased for the short period in which the hydrogen concentration is increased; however, such an inconvenience can be easily solved by performing, works in a region in which the dose rate is increased, in a period excluding such a short period. Further, since the hydrogen concentration is low in most of the period excluding the short period, the increased dose rate of the main steam system for the short period is not much of a problem in operating the reactor.

In practice, the combination of hydrogen injection and shifting of the pH on the weak alkali side has the effect of reducing the dose rate of a main steam system, and accordingly, if the short period is set typically at about one or two days, the dose rate of the main steam system can be reduced as compared with the case of only hydrogen injection not combined with shifting of the pH on the weak alkali side.

As described above, since the injected amount of hydrogen can be reduced in accordance with the effective oxygen concentration of reactor water, the reactor can be operated without increasing the dose rate of a main steam system more than that in the conventional method. Also, if the reactor is operated with the same injected amount of hydrogen as that in the conventional method, since the concentrations of oxygen and hydrogen peroxide become lower than those in the conventional method, the reduced amount of electrochemical corrosion potential becomes large.

The effect of the pH on the electrochemical corrosion potential will be described below. The reductions of oxygen and hydrogen peroxide are expressed by the following reaction formulas 5 and 6:

$$O_2 + 4H^+ + 4e^- \rightarrow 2H_2O \qquad \text{(reaction formula 5)}$$

$$H_2O_2 + 2H^+ + 2e^- \rightarrow 2H_2O \qquad \text{(reaction formula 6)}$$

In each reaction formula, the term of proton ($H^+$) is contained on the left side. This means that the reaction formula is dependent on the pH. As the pH of reactor water becomes higher, the concentration of protons becomes smaller, with a result that the reaction from the left side to the right side in the above reaction formulas is restricted. Accordingly, under a condition that the effective oxygen concentration of reactor water is reduced by hydrogen injection, the reduced amount of electrochemical corrosion potential becomes significantly larger. This shows that the above-described effect of suppressing the initiation and growth of SCC can be obtained.

The pH in a crack formed in a surface of a reactor structural member will be described below. If the injected amount of hydrogen is excessively limited for suppressing an increase in dose rate of a main steam system, the effective oxygen concentration of reactor water becomes higher and thereby the electrochemical corrosion potential becomes higher. On the other hand, as shown in Fig. 10, in a crack portion in a reactor structural member, oxygen is consumed on the inner surface of the crack. At this time, oxygen is supplied only by diffusion from the outside of the crack. Accordingly, the oxygen concentration is reduced in the direction from the crack mouth (opening portion of the crack) to the crack tip (leading end of the crack), and it becomes about zero at the crack tip. In this way, the local electrochemical corrosion potential at the crack tip is lower than that at the crack mouth and outside of the crack.

As a result, electrons ($e^-$) migrate through the reactor structural member in the direction from the crack tip to the crack mouth, and therefore, the electrons are deficient at the crack tip. To additionally supply electrons, at the crack tip, a metal (M) is oxidized as a metal ion ($M^{n+}$) and dissolved in water in the crack as shown in the following reaction formula. Further, part of the metal ions are hydrolyzed by the reaction with water, to form an oxide film.

$$M \rightarrow M^{n+} + ne^- \qquad \text{(reaction formula 7)}$$

$$M^{n+} + mH_2O \rightarrow M(OH)^{n-m} + mH^+ \qquad \text{(reaction formula 7)}$$

In the reaction formulas 7 and 8, character n designates a mole number of electrons emitted when the metal is ionized, and character m designates a mole number of water consumed upon hydrolytic reaction of the metal ions with the water.

As a result of the fact that the metal is oxidized, being dissolved in water, and is hydrolyzed by reaction with water, protons ($H^+$) are produced in water at the crack tip. Then, anions in the reactor water flow from the crack mouth into the crack tip in such a manner as to keep an electrically neutral state (electroneutrality) against positive charges of these metal ions and protons.

The anions in the reactor water mainly include $OH^-$ present with equilibrium between $H^+$ and the same, and additionally include $SO_4^{2-}$, $NO_3^-$, etc., bled from a resin, etc. in the reactor water. These anions flow from the crack mouth to the crack tip due to a differential potential therebetween and enriched at the crack tip, whereby the pH at the crack tip is shifted on the acidic side. This may be considered to act as a motive force for developing the crack.

On the other hand, in the case where hexavalent chromium such as $CrO_4^{2-}$ in the reactor water is converted into trivalent chromium ($Cr^{3+}$) by hydrogen injection, the bleeding of a cation resin in the reactor water is prevented, and thereby the pH of the reactor water is kept substantially neutral. Further, excess $OH^-$ is present in the reactor water by controlling the reactor water on the weak alkali side.

In this case, the anions flowing from the crack mouth to the crack tip due to a differential potential therebetween is only $OH^-$, whereby the pH at the crack tip is shifted on the alkali side. Accordingly, it is possible to effectively suppress the growth of a crack by the above-described combination of hydrogen injection and shifting of the pH on the weak alkali side.

An effect of reducing radioactivity of reactor water will be described below. The elution rate of a radioactive material such as $^{60}Co$ which is eluted from a radioactive clud (solid particle) precipitated on the surface of a fuel rod in the reactor into reactor water is dependent on the pH of the reactor water. A relationship between the pH of reactor water and the elution rate of Co is shown in Fig. 11. In Fig. 11, CoO and $CoFe_2O_4$ are each shown as a radioactive clud.

As shown in Fig. 11, the elution rate of Co is large when the pH at room temperature of reactor water is set on the acidic side, and becomes significantly smaller as the pH at room temperature of the reactor water is shifted on the alkali side. Accordingly, by controlling the pH at room temperature of the reactor water on the weak alkali side, the radioactivity of the reactor water can be reduced and thereby the dose rate of the reactor can be reduced.

Further, as shown in Fig. 11, when the pH at room temperature of the reactor water becomes higher than 9, the corrosion rate of zircalloy becomes higher than that at the pH = 7. According to the present invention, since the pH at room temperature of the reactor water is controlled in a weak alkali range ($7 < pH \leqq 9$), it is possible to suppress the corrosion of a zircalloy made fuel cladding tube at a value comparable to that at the pH = 7.

BRIEF DESCRIPTION OF THE DRAWINGS

Fig. 1 is a diagram showing a method of operating a reactor according to a first embodiment in which the present invention is applied to a BWR.
Fig. 2 is a schematic flow diagram of a primary cooling system of the BWR to which the reactor operating method according to the first embodiment is applied.
Fig. 3 is a graph showing a analyzed result of a relationship between the Na concentration of reactor water and the pH of the reactor water.
Fig. 4 is a diagram showing a method of operating a reactor according to a second embodiment in which the present invention is applied to a BWR.
Fig. 5 is a schematic flow diagram of a primary cooling system of the BWR to which the reactor operating method according to the second embodiment is applied.
Fig. 6 is a graph schematically showing a change in pH of reactor water and a change in pH at the crack tip with elapsed time in the operating method according to the second embodiment.
Fig. 7 is a diagram showing a method of operating a reactor according to a third embodiment in which the present invention is applied to a BWR.
Fig. 8 is a schematic flow diagram of a primary cooling system of the BWR to which the reactor operating method according to the third embodiment is applied.
Fig. 9 is a graph showing an analyzed result of a relationship between the hydrogen concentration of feedwater and the effective oxygen concentration of the reactor water.
Fig. 10 is a diagram illustrating the pH in a crack.
Fig. 11 is a graph showing a relationship between the pH of reactor water and the elution rate of Co.

DESCRIPTION OF THE PREFERRED EMBODIMENTS

(First Embodiment)

A first embodiment in which the present invention is applied to a boiling water reactor (BWR) will be described with reference to Figs. 1 to 3. Fig. 1 is a diagram showing a method of operating a reactor according to the first embodiment. In this embodiment, the present invention is applied to a BWR in which hydrogen is injected in reactor water from a period of start-up operation. Fig. 2 is a schematic flow diagram showing a primary cooling system of the BWR to which the reactor operating method according to the first embodiment is applied. Fig. 3 is a graph showing an analyzed result of a relationship between the Na concentration and pH of reactor water.

Referring to Fig. 2, a primary cooling system of the BWR includes a condensate system 1, a feedwater system 2, a reactor pressure vessel 3, a recirculation system 4, a main steam system 5, a turbine 6, a condenser 7, and a reactor water clean up system 17. An off-gas system 28 is connected to the condenser 7.

A condensate pump 8 and a condensate demineralizer 9 are provided in the condensate system 1. A steam air jet ejector 27 and a recombiner 30 are provided in the off-gas system 28. An oxygen injector 29 is connected to a pipe line disposed between the condenser 7 and the steam jet air ejector 27 in the off-gas system 28.

A low pressure feedwater heater 10, a high pressure feedwater heater 11, and a feedwater pump 12 are provided in the feedwater system 2. A hydrogen injector 24 is connected to a pipe line disposed between the low pressure feedwater heater 10 and the feedwater pump 12 in the feedwater system 2. A water chemistry measuring system 20 for measuring the water chemistry such as conductivity, pH, and dissolved oxygen of feedwater is connected via a sampling pipe line 19 to a pipe line between the high pressure feedwater heater 11 and the reactor pressure vessel 3.

A heat exchanger 17a, a reactor water clean up system pump 17b, and a reactor water clean up system demineralizer 18 are provided in the reactor water clean up system 17. A hydrogen injector 24a and an alkali injector 32 are connected to a pipe line directly connected to the feedwater system 2 side of the reactor water clean up system 17.

An electrochemical corrosion potential (ECP) sensor 25 for measuring an electrochemical corrosion potential of reactor water is provided in a bottom drain 16. Water chemistry measuring systems 20a and 20b for measuring water chemistry of reactor water excluding ECP are connected to a sampling pipe line 22 of the bottom drain 16 and a sampling pipe line 21 of the reactor water clean up system 17, respectively.

A water chemistry measuring system 20c is connected to the main steam system 5 via a sampling pipe line 23. The water chemistry measuring system 20c is provided for measuring the water chemistry of condensed water produced from steam. A dose rate monitor 26 for measuring the dose rate of the main steam system is provided in the main steam system 5.

The BWR plant having the above configuration is operated such that steam produced by boiling of reactor water in a core 13 of the reactor passes through the main steam system 5 to drive the turbine 6, thereby creating electric power. The steam outgoing from the turbine 6 is condensed in the condenser 7, and the condensed water flows in the condensate system 1 as condensate. The condensate passes through the low pressure feedwater heater 10, the feedwater pump 12, and the high pressure feedwater heater 11, flowing in the feedwater system 2 as feedwater, and returns from the feedwater system 2 into the reactor pressure vessel 3. The reactor water is circulated in the recirculation system 4 by the recirculation pump 4a.

Most of the reactor water, having been not converted into steam, separates from steam in an upper portion of the reactor pressure vessel 3 and flows to the lower side of the reactor pressure vessel 3 through a downcomer 14 disposed around the core 13. Such reactor water flows in the recirculation system 4, and is returned to the core 13 again by the recirculation pump 4a. Feedwater in an amount equivalent to the amount of the reactor water lost by production of steam is supplied.

To purify the reactor water, part of the reactor water is extracted from the recirculation system 4 and the bottom drain 16 of a reactor lower plenum 15, and is fed to the reactor water clean up system 17. In the reactor water clean up system 17, ions of impurities in the reactor water are removed by the reactor water clean up system demineralizer 18. The reactor water thus purified by the reactor water clean up system demineralizer 18 is mixed with the feedwater and returned to the reactor pressure vessel 3.

The water chemistry (concentration of dissolved oxygen, concentration of dissolved hydrogen, pH, electric conductivity, and the like) of the feedwater is measured as follows: namely, the feedwater sampled from the sampling pipe line 19 is reduced in pressure and cooled, and the water chemistry of the sampled feedwater is measured in online by the water chemistry measuring system 20. The water chemistry of the reactor water is measured as follows: namely, the reactor water sampled from each of the sampling pipe lines 21 and 22 is reduced in pressure and cooled, and the water chemstry of the sampled reactor water is measured in online by the associated one of the water chemistry measuring systems 20b and 20a. The ECP of the reactor water is also measured by the ECP sensor 25. Accordingly, with respect to the reactor water, the concentrations of oxygen and hydrogen peroxide can be both quantitatively measured.

In the main steam system 5, steam extracted from the sampling pipe line 23 is condensed, the condensed water being reduced in pressure and cooled, and the water chemistry of the condensed water is measured in online by the water chemistry measuring system 20c. In each of the water chemistry measuring systems 20, 20a, 20b and 20c, the water chemistry of the sampled water is measured under a condition with a temperature ranging from room temperature to about 50°C and a pressure ranging from 1 to about 5 atm, which condition is established by reducing the pressure of the sampled water and cooling the sampled water as described above.

Hereinafter, the reactor operating method according to the first embodiment will be described with reference to Fig. 1. In Fig. 1, the abscissa designates an operating time of a reactor, and the ordinate designates a temperature, a pH (at room temperature), a hydrogen concentration of reactor water, and a reactor power. The operating time is expressed by a value relative to one operating cycle. One operating cycle includes a start-up operation time, a rated operation time, and a shutdown operation time. The rated operation time is very longer than each of the start-up operation time and the shutdown operation time, and therefore, part of the rated operation time is omitted in Fig. 1. The temperature and hydrogen concentration of reactor water, and the reactor power are each expressed by a value relative to that during rated operation.

Upon start-up operation, equipment such as power sources in a nuclear power station, an instrument and control system, an in core monitoring system, and a reactor control system are checked; a reactor primary cooling system and a steam turbine system are prepared for operation; and a control rod drive system and a recirculation pump are operated. In this embodiment, an alkali material is injected in reactor water from the period of start-up operation to shift the pH of the reactor water on the alkali side.

At the beginning stage of start-up operation, hydrogen is continuously injected from the hydrogen injector 24a into the reactor water clean up system 17, and the opening degree of a valve 34a (that is, the injected amount of hydrogen) is adjusted to set the hydrogen concentration of the reactor water in a range of about 30 to 100 ppb. On the other hand, an alkali material is continuously injected from the alkali injector 32 into the reactor water clean up system 17, and the opening degree of a valve 35 (that is, the injected amount of the alkali material) is adjusted to set the pH of the reactor water at about 9. The hydrogen concentration and pH of the reactor water are measured by using the water chemistry measuring systems 20a and 20b.

An alkali solution such as NaOH, KOH, or LiOH is injected from the alkali injector 32. Upon start-up operation, the feedwater system 2 is stopped until the reactor power rises to a certain level, and in this regard, the reactor water clean up system 17 is selected as the desirable alkali material injection point. The opening degree of the valve 35 may be manually adjusted by an operator, automatically adjusted with the temperature of the reactor water taken as an input parameter, or semiautomatically adjusted by combination of manual adjustment and automatic adjustment.

In such a state, the recirculation system 4 is operated by the recirculation pump 4a under a condition of a low flow rate (about 20% of the flow rate upon rated operation) and control rods (not shown) are withdrawn from the core 13, to thereby obtain a criticality (critical condition) of the reactor. When the temperature rise of the reactor water starts to occur, the valve 35 is closed to stop the injection of the alkali material into the reactor water, thereby lowering the pH of the reactor water to a value less than 9. This can reduce adverse effect of a high concentration of the alkali material on the reactor structural members due to the temperature rise of the reactor water. In addition, the pH may be lowered by making small the opening degree of the valve 35 so as to gradually reduce the injected amount of the alkali material into the reactor water.

The temperature of the reactor water and the pressure in the reactor are then increased by nuclear heat of fuel, with a result that the operation state of the reactor reaches the rated operation state. At this time, the alkali level in the reactor water is adjusted, concretely, reduced to the same weak alkalinity (pH = 8) as that upon rated operation. After that, the pH of the reactor water is kept at about 8. Further, a series of start-up sequences including start-up of the turbine and the generator are carried out, and thereafter, the reactor power is increased to a rated power. In this way, the start-up operation is completed.

Upon rated operation, the pH of the reactor water is kept at about 8 indicating weak alkalinity, and accordingly, part of a cation resin in the condensate demineralizer 9 or the reactor water clean up system demineralizer 18 is changed from a usual H-type into an alkali type such as an Na-type. When cations in the feedwater or the reactor water are removed by such a demineralizer, cations such as Na ions are leaked in the feedwater or the reactor water and the concentration of the cations is adjusted, to thereby control the pH of the reactor water on the weak alkali side. The alkali type cation resin (ion-exchange resin) may be of a K-type, Li-type, $NH_4^+$-type, or the like.

After the operation of the feedwater system 2 starts, the valve 34a is closed and the valve 34 is opened to start continuous hydrogen injection from the hydrogen injector 24 into the feedwater system 2. At this time, the opening degree of the valve 34 (injected amount of hydrogen) is adjusted in such a manner that the hydrogen concentration of the reactor water is substantially the same as that upon start-up operation. Concretely, the opening degree of the valve 34 may be adjusted in such a manner that a ratio of the injected amount (flow rate) of hydrogen to the flow rate of the feedwater is specified.

One example of the method of controlling the pH of the reactor water by adding an alkali material will be described. Fig. 3 is a graph showing an analyzed result of a relationship between an Na concentration of the reactor water and a pH of the reactor water. In addition, the analysis shown in Fig. 3 is performed under a condition that any impurity other than Na does not exist in the reactor water. Referring to Fig. 3, when the Na concentration is low (0.1 to 1 ppb), the pH is determined depending on the concentration of $H^+$ ions produced by dissociation of water and is substantially kept at 7. The pH is gradually increased as the Na concentration becomes larger than 1 ppb. Concretely, the pH becomes about 8 at the Na concentration of about 20 ppb, and becomes about 9 at the Na concentration of about 250 ppb.

Accordingly, the pH of the reactor water can be controlled at about 9 by adjusting the injected amount of Na from the alkali injector 32 in such a manner that the Na concentration in the reactor water becomes about 250 ppb. The pH of the reactor water can be also controlled at about 8 by adjusting the amount of Na leaked from the condensate demineralizer 9 or the reactor water clean up system demineralizer 18 in such a manner that the Na concentration of the reactor water becomes about 20 ppb.

The reason for this is as follows: namely, since the element Na is strong electrolyte in a state being dissolved in the reactor water, such an element is hydrated to produce equivalent $OH^-$ ions, to shift the dissociation equilibrium of the reactor water on the alkali side, thereby changing the pH of the reactor water.

Upon shutdown operation, the control rods are inserted in the core 13 to reduce the reactor power, and when the reactor power is reduced to a specific value, the generator is taken off in parallel. Then, after the temperature of the reactor water and the reactor pressure are sufficiently reduced, the valve 34 is closed, thus completing the shutdown operation.

As described above, at the beginning stage of start-up operation in which the temperature of the reactor water is lower, the higher pH than that upon rated operation is permitted. If hydrogen is injected in the reactor water from the beginning stage of start-up operation, the injected hydrogen is not escaped to outside of the reactor because steam is not generated in the reactor. Accordingly, the recombination reactions of oxygen and hydrogen peroxide in the reactor water with hydrogen are accelerated by the action of weak gamma (γ) rays emitted from the fuel which has been loaded in the core 13 from the previous operating cycle.

In this embodiment, since the pH is controlled at 9 at the beginning stage of start-up operation and thereafter it is controlled at 8, the above-described recombination reactions are accelerated. Accordingly, the concentration of dissolved oxygen in the reactor water (effective oxygen concentration) can be effectively reduced without increasing the dose rate of the main steam system. As a result, it is possible to effectively suppress the initiation and growth of SCC of reactor structural members.

In this embodiment, since the pH of the reactor water is shifted on the weak alkali side, the differential potential between the inside and outside of a crack (the potential difference between the crack mouth and the crack tip) formed in the surface of a reactor structural member becomes small, and thereby the alkali material is accumulated in the crack. As a result, the pH in the crack tip can be shifted on the alkali side, so that it is possible to effectively suppress the growth of the crack formed in the reactor structural member. Further, since the pH of the reactor water is shifted on the weak alkali side, as described above, it is possible to reduce the radioactivity of the reactor water.

In this embodiment, the pH of the reactor water is reduced from 9 to 8 on the midway of start-up operation; however, the present invention is not limited thereto. To be more specific, the pH of the reactor water, which is adjusted in the range of $7 < pH \leqq 9$ throughout the operating cycle, is adjusted such that the pH is kept in the range of $8.5 < pH \leqq 9$ at the beginning stage of start-up operation, being reduced to a level in the range of $7 < pH \leqq 8.5$ on the midway of start-up operation, and is then kept in such a level of $7 < pH \leqq 8.5$.

In this embodiment, since the hydrogen concentration of the reactor water is controlled in the range of 30 to 100 ppb; however, it may be preferably controlled in a range of 30 to 65 ppb. In this case, the dose rate of the main steam system can be further reduced. Further, if possible, the sensor for measuring the quality of the reactor water such as the ECP sensor may be preferably disposed in the reactor pressure vessel 3.

(Second Embodiment)

Next, a second embodiment in which the present invention is applied to a BWR will be described with reference to Figs. 4 to 6. Fig. 4 is a diagram showing a method of operating a reactor according to the second embodiment in which the present invention is applied to the BWR in which hydrogen is injected to reactor water from a period of start-up operation. Fig. 5 is a schematic flow diagram showing a primary cooling system of the BWR to which the reactor operating method in the second embodiment is applied. Fig. 6 is a graph schematically showing a change in pH of reactor water and a change in pH at the crack tip with elapsed time in the operating method according to the second embodiment.

The primary cooling system shown in Fig. 5 has the same basic configuration as that described in the first embodiment with reference to Fig. 2 except for a means of controlling the amount of hydrogen injected from the hydrogen injector 24 into the feedwater system 2. The overlapped description of the configuration other than such a control means, which is the same as that in the first embodiment, is omitted. Referring to Fig. 5, reference numeral 31 designates an accumulator for accumulating hydrogen, which is used for increasing the injected amount of hydrogen for a short period as will be described later.

The reactor operating method shown in Fig. 4 is basically the same as that described in the first embodiment with reference to Fig. 1 except for increasing the hydrogen concentration in reactor water upon rated operation for a short-period. The overlapped description of the other procedures, which are the same as those shown in Fig. 1, is omitted.

Referring to Fig. 4, in this embodiment, during rated operation, the pH of the reactor water is kept at about 8, and in such a state, the hydrogen concentration of the reactor water is increased for a short-period, for example, about one or two days. In such a period, the hydrogen concentration may be increased to a value, for example, in a range of 100 to 200 ppb. The method of increasing the hydrogen concentration for a short-period will be described below.

Before continuous injection of hydrogen from the hydrogen injector 24 into the feedwater system 2 is performed by opening the valve 34 (hereinafter, referred to as "a continuous hydrogen injection step"), hydrogen in a specific amount (hereinafter, referred to as "an excess hydrogen amount") is previously accumulated in the accumulator 31 provided between the hydrogen injector 24 and the feedwater system 2. At the time when the hydrogen concentration of the reactor water is intended to be increased, the hydrogen accumulated in the accumulator 31 is released in the feedwater system 2 for a short-period (hereinafter, referred to as "an excess hydrogen feed period"), to temporarily increase the injected amount of hydrogen.

The necessary excess hydrogen amount and excess hydrogen feed period are previously determined, before the continuous hydrogen injection step, on the basis of the ECP of the reactor water measured by the ECP sensor 25. With this setting, the injected amount of hydrogen can be controlled in such a manner as to satisfy requirements associated with the injected amount and injection period of hydrogen most suitable for allowing an alkali material to certainly permeate to the crack tip.

In addition, if the upper limit of the amount of hydrogen generated, for example, through electrolysis of water by a hydrogen generator is just set at the injected amount of hydrogen necessary for the continuous hydrogen injection step, the above-described temporary injection of excess hydrogen can be sufficiently carried out by previously accumulating hydrogen in a sufficient amount in the accumulator 31.

The ECP of the reactor water can be significantly reduced by increasing the amount of hydrogen injected in the reactor water for a short-period (hereinafter, referred to as "a higher hydrogen injection operation for a short-period") in the state in which the pH of the reactor water is kept on the weak alkali side as described above. In this case, however, the excess hydrogen amount is set at such a value as to allow the ECP at the crack mouth to be nearly equal to that at the crack tip, more specifically, become about -500 $mV_{VS}SHE$ (upon rated operation). Here, [$mV_{VS}SHE$] means a relative potential to a standard hydrogen electrode potential.

The ECP at the crack mouth may be regarded as the ECP of the reactor water. Accordingly, by previously determining a relationship between the injected amount of hydrogen from the hydrogen injector 24 and the ECP of the reactor water, the above excess hydrogen amount can be set on the basis of such a relationship.

By making the ECP at the crack mouth nearly equal to that at the crack tip as described above, the migration of alkali metal ions or cations to the crack tip due to concentration diffusion is accelerated, so that the pH at the crack tip can be shifted on the weak alkali side. After that, the injected amount of hydrogen is returned to the value most suitable for the continuous hydrogen injection step. With this configuration, it is expected to obtain an effect comparable to that obtained in the higher alkali operation upon start-up operation.

Fig. 6 schematically shows a change in pH of the reactor water and a change in pH at the crack tip with elapsed time in the reactor operating method according to this embodiment. In the figure, the abscissa designates the operating time of the reactor, and the ordinate designates the reactor power and also designates the pH of the reactor water and the pH at the crack tip. The operating time of the reactor and the reactor power are each shown by a relative value, like Fig. 4.

Referring to Fig. 6, the pH of the reactor water is about 9 which is equal to the pH at the crack tip upon the higher alkali operation at the beginning stage of start-up operation. In a period from the rear half of start-up operation to rated operation, the pH of the reactor water is kept at about 8; however, the pH at the crack tip is gradually reduced to a value less than 8. By carrying out the higher hydrogen injection operation for a short-period during rated operation, the pH at the crack tip is increased to about 8, that is, to the same value as the pH of the reactor water.

Even in this embodiment, the same effect as that obtained in the first embodiment can be obtained. Also, in this embodiment, it is possible to allow the alkali material having been accumulated in the crack upon start-up operation to be less removed from the crack by keeping the pH of the reactor water on the weak alkali side upon rated operation. Further, in this embodiment, since the alkali material in a larger amount can be accumulated in the crack by increasing the hydrogen concentration of the reactor water for a short-period during rated operation, it is possible to certainly suppress the growth of the crack.

Additionally, in this embodiment, a crack growth rate sensor such as a DCB (Double Cantilever Beam) sensor may be provided in the bottom drain 16 for monitoring the crack growth rate of a material in the reactor water. With this configuration, when the pH at the crack tip is reduced (that is, when the crack growth rate becomes larger than a specific value), the supply of the alkali material to the crack tip can be suitably performed by carrying out the above-described higher hydrogen injection operation for a short-period.

It should be noted that when the injected amount of hydrogen is increased for a short period upon rated operation as described in this embodiment, the dose rate of the main steam system 5 in the period is increased. Such an inconvenience can be easily solved by executing works belonging to a region, in which the dose rate is increased, of the nuclear power station in a period excluding the above-described short period. In addition, with respect to the above-described higher hydrogen injection operation for a short period, a gas trailer may be additionally provided, and/or the amount of hydrogen generated by a hydrogen generator may be increased.

(Third Embodiment)

A third embodiment in which the present invention is applied to a BWR will be described with reference to Figs. 7 and 8. Fig. 7 is a diagram showing a method of operating a reactor according to the third embodiment. In the third embodiment, the present invention is applied to the BWR in which hydrogen is injected to reactor water from a period of start-up operation. Fig. 8 is a flow diagram of a primary cooling system of the BWR to which the reactor operating method according to the third embodiment is applied.

The primary cooling system shown in Fig. 8 has the same basic configuration as that described in the second embodiment with reference to Fig. 5 except that the hydrogen injector 24a and the alkali injector 32 connected to the reactor water clean up system 17 are omitted and a DCB sensor 33 is added to the bottom drain 16. The overlapped description of the other configuration, which is the same as that shown in Fig. 5, is omitted.

The reactor operating method shown in Fig. 7 is basically the same as that described in the second embodiment with reference to Fig. 4 except that the pH of reactor water is kept at about 8 indicating weak alkalinity throughout the operating cycle. To be more specific, in this embodiment, the higher alkali operation is not carried out upon start-up operation and the higher hydrogen injection operation for a short period is carried out upon rated operation. The overlapped description of the other procedures, which are basically the same as those shown in Fig. 4, is omitted.

In this embodiment, since the hydrogen injector for injecting hydrogen in reactor water is connected only to the feedwater system 2, the hydrogen injection method upon start-up operation is different from that in each of the first and second embodiments. To be more specific, in this embodiment, hydrogen is continuously injected in the feedwater system 2 by using the hydrogen injector 24 from a period of start-up operation, and the opening degree of the valve 34 (the injected amount of hydrogen) is adjusted in such a manner that the hydrogen concentration in the reactor water is set substantially in a range of 30 to 100 ppb.

Further, in this embodiment, the growth rate of a crack in a material in the reactor water is monitored by using the DCB sensor provided in the bottom drain 16, and when the pH at the crack tip is reduced (when the crack growth rate becomes larger than a specific value), the higher hydrogen injection operation for a short period is carried out. With this configuration, the supply of an alkali material to the crack tip can be suitably performed.

According to this embodiment, by carrying out the higher hydrogen injection operation for a short period upon rated operation, the recombination reaction due to hydrogen injection can be accelerated for a short-period during rated operation. Accordingly, it is possible to effectively suppress the initiation and growth of SCC of reactor structural members by effectively reducing the concentration of dissolved oxygen (effective oxygen concentration) in the reactor water without increasing the dose rate of the main steam system.

Further, since the pH at the crack tip can be shifted on the alkali side by controlling the reactor water on the weak alkali side, the growth of the crack in each reactor structural member can be effectively suppressed, and since the reactor water is controlled on the weak alkali side, the radioactivity of the reactor water can be reduced.

Additionally, even in this embodiment, the dose rate of the main steam system can be reduced by controlling the hydrogen concentration of the reactor water in a range of 30 to 65 ppb. Further, if possible, the sensor for measuring the quality of the reactor water such as the ECP sensor or DCB sensor may be provided in the reactor pressure vessel.

## Claims

**1.** A method of operating a nuclear reactor, in which a boiling water reactor is operated while a pH of reactor water in said reactor is controlled on an alkali side and hydrogen is injected in said reactor water, **characterized in that**:

a pH at room temperature of said reactor water is controlled at a relatively high level in a range of $8.5 < pH \leqq 9$ at the beginning stage of start-up operation of one operating cycle, and then controlled at a relatively low level in a range of $7 < pH \leqq 8.5$ until shutdown operation; and

a hydrogen concentration of said reactor water is controlled in a range of 30 to 100 ppb throughout said operating cycle.

**2.** A method of operating a nuclear reactor, in which a boiling water reactor is operated while a pH of reactor water in said reactor is controlled on an alkali side and hydrogen is injected in said reactor water, **characterized in that**:

a pH at room temperature of said reactor water is controlled at a relatively high level in a range of 8.5 < pH ≦ 9 at the beginning stage of start-up operation of one operating cycle, and then controlled at a relatively low level in a range of 7 < pH ≦ 8.5 until shutdown operation; and
a hydrogen concentration of said reactor water is controlled in a range of 30 to 100 ppb in most of said operating cycle excluding a short period upon rated operation, and is increased to a value in a range of 100 to 200 ppb in said short period upon rated operation.

**3.** A method of operating a nuclear reactor according to claim 1 or 2, wherein the pH at room temperature of said reactor water is reduced from said high level to said low level in a period in which the temperature of said reactor water is lower than that upon rated operation.

**4.** A method of operating a nuclear reactor according to any one of claims 1 to 3, wherein the pH at room temperature of said reactor water is controlled at said high level by injecting, a solution or gas which indicates alkalinity when being dissolved in water, in a reactor primary cooling system.

**5.** A method of operating a nuclear reactor, in which a boiling water reactor is operated while a pH of reactor water in said reactor is controlled on an alkali side and hydrogen is injected in said reactor water, **characterized in that**:

a pH at room temperature of said reactor water is controlled in a range of 7 < pH ≦ 8.5 throughout one operating cycle; and
a hydrogen concentration of said reactor water is controlled in a range of 30 to 100 ppb in most of said operating cycle excluding a short period upon rated operation, and is increased to a value in a range of 100 to 200 ppb in said short period upon rated operation.

**6.** A method of operating a nuclear reactor according to any one of claims 1 to 5, wherein an alkali-type cation resin is used for a demineralizer in a condensate system or a reactor water clean up system, and the pH at room temperature of said reactor water is controlled in the range of 7 < pH ≦ 8.5 by adjusting a concentration of cations leaked from said cation resin.

**7.** A method of operating a nuclear reactor according to any one of claims 1 to 6, wherein the hydrogen concentration controlled in the range of 30 to 100 ppb is controlled in a range of 30 to 65 ppb.

**8.** A method of operating a nuclear reactor according to claim 2 or 5, wherein the hydrogen concentration of said reactor water is increased when a crack growth rate monitored by a crack growth rate sensor provided in said reactor water or a sampling pipe line connected thereto becomes larger than a specific value.

**9.** A method of operating a nuclear reactor, in which a boiling water reactor is operated while a pH of reactor water in said reactor is controlled on an alkali side and hydrogen is injected in said reactor water, **characterized in that**:

a pH at room temperature of said reactor water is controlled at a relatively high level in a range of 7 < pH ≦ 9 at the beginning stage of start-up operation of one operating cycle, and then controlled at a relatively low level in said range until shutdown operation; and
a hydrogen concentration of said reactor water is controlled in a range of 30 to 100 ppb throughout said operating cycle.

**10.** A method of operating a nuclear reactor, in which a boiling water reactor is operated while a pH of reactor water in said reactor is controlled on an alkali side and hydrogen is injected in said reactor water, **characterized in that**:

a pH at room temperature of said reactor water is controlled at a relatively high level in a range of 7 < pH ≦ 9 at the beginning stage of start-up operation of one operating cycle, and then controlled at a relatively low level in said range until shutdown operation; and
a hydrogen concentration of said reactor water is controlled in a range of 30 to 100 ppb in most of said operating cycle excluding a short period upon rated operation, and is increased to a value in a range of 100 to 200 ppb in said short period upon rated operation.

FIG. I

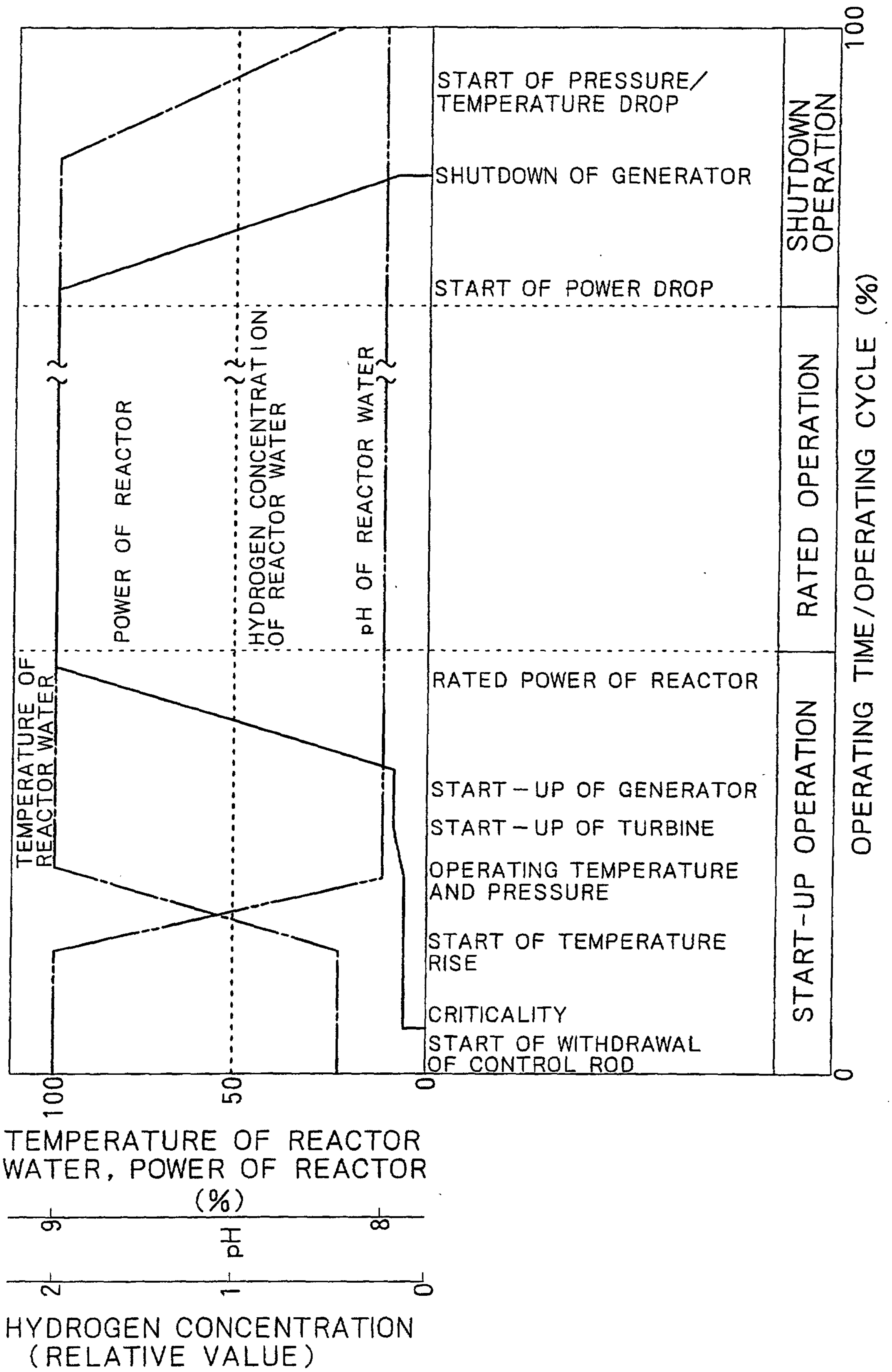
START OF PRESSURE/
TEMPERATURE DROP
SHUTDOWN OF GENERATOR
START OF POWER DROP
RATED POWER OF REACTOR
START-UP OF GENERATOR
START-UP OF TURBINE
OPERATING TEMPERATURE
AND PRESSURE
START OF TEMPERATURE
RISE
CRITICALITY
START OF WITHDRAWAL
OF CONTROL ROD
SHUTDOWN
OPERATION
RATED OPERATION
START-UP OPERATION
OPERATING TIME/OPERATING CYCLE (%)
0
100
TEMPERATURE OF
REACTOR WATER
POWER OF REACTOR
HYDROGEN CONCENTRATION
OF REACTOR WATER
pH OF REACTOR WATER
100
50
0
TEMPERATURE OF REACTOR
WATER, POWER OF REACTOR
(%)
9
pH
8
2
1
0
HYDROGEN CONCENTRATION
(RELATIVE VALUE)

FIG. 2

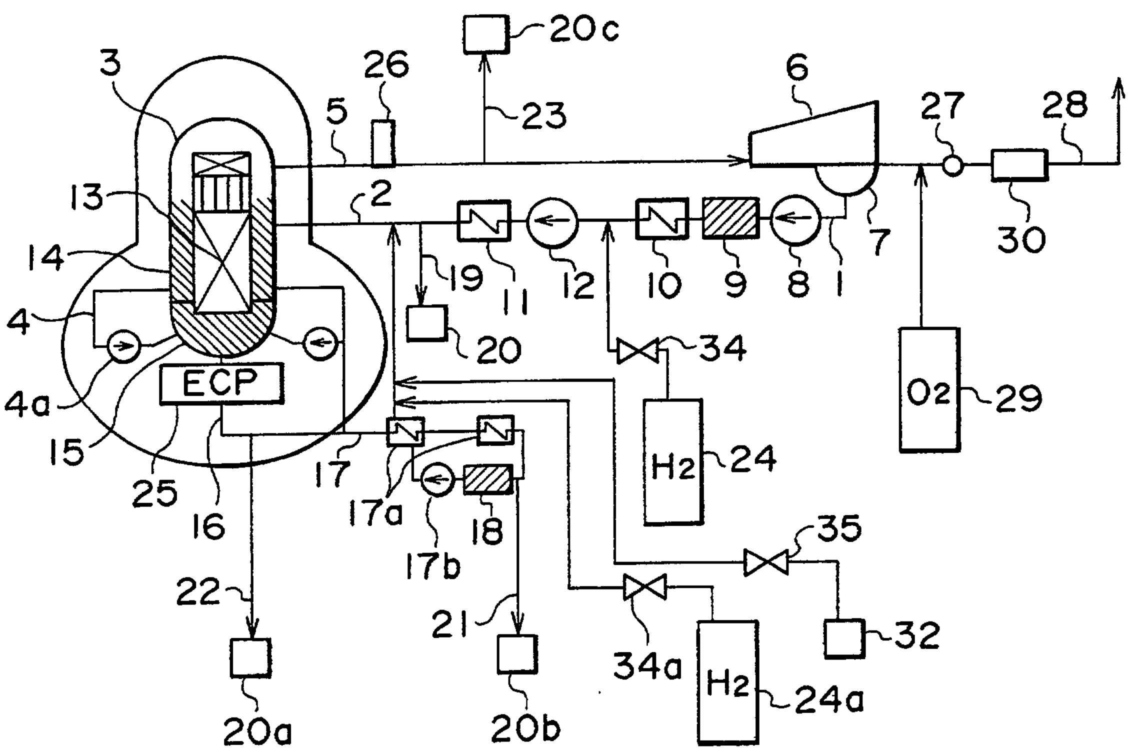
20c
26
3
5
23
6
27
28
13
2
7
30
14
19
11
12
10
9
8
1
4
20
34
4a
ECP
O2
29
H2
24
15
17
25
16
17a
18
35
17b
22
21
34a
32
H2
24a
20a
20b

FIG. 3

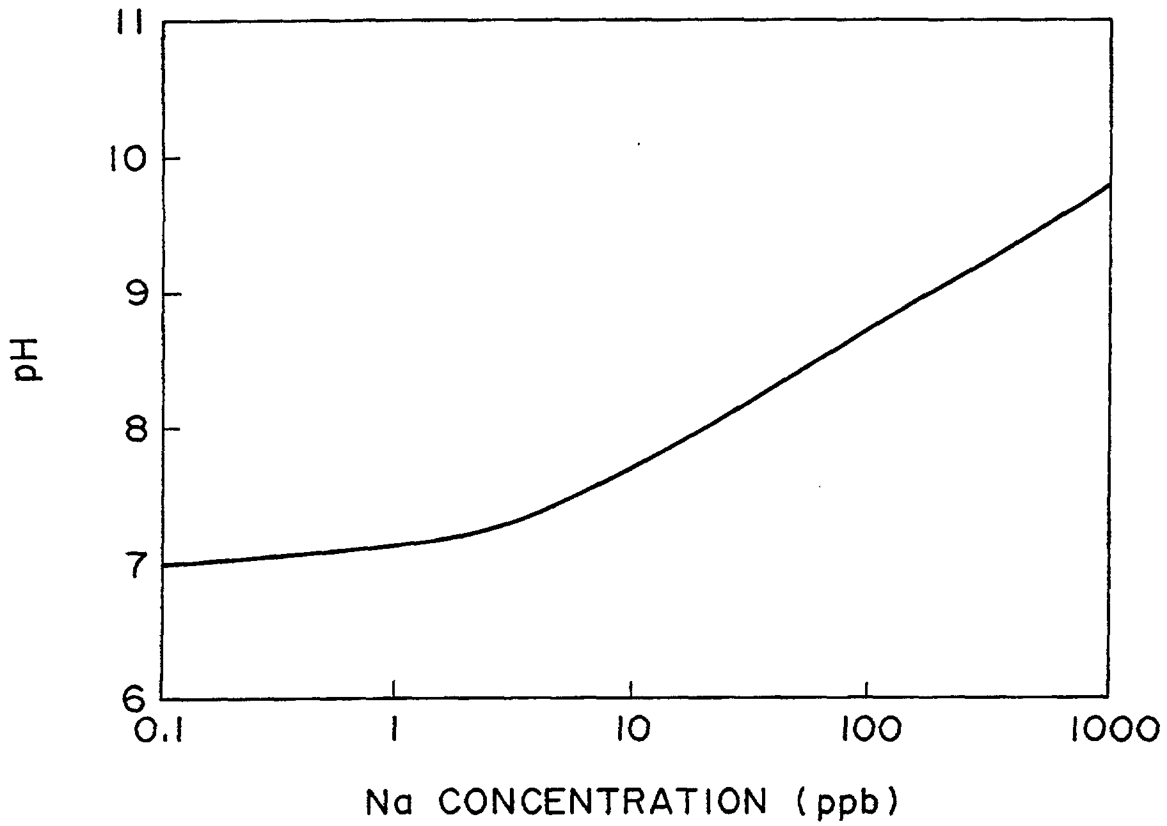

FIG.4

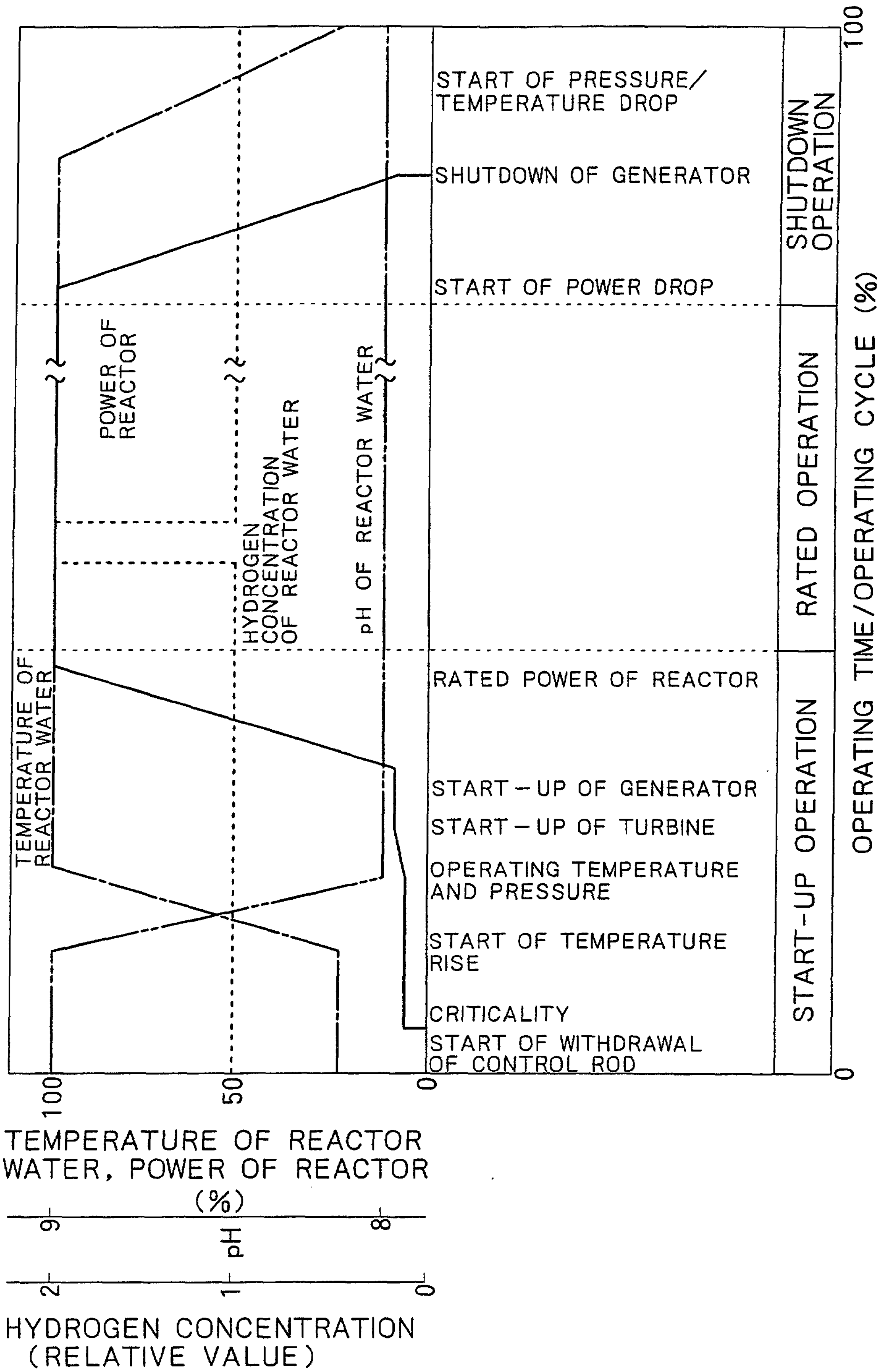
START OF PRESSURE/ TEMPERATURE DROP
SHUTDOWN OF GENERATOR
START OF POWER DROP
RATED POWER OF REACTOR
START - UP OF GENERATOR
START - UP OF TURBINE
OPERATING TEMPERATURE AND PRESSURE
START OF TEMPERATURE RISE
CRITICALITY
START OF WITHDRAWAL OF CONTROL ROD
POWER OF REACTOR
HYDROGEN CONCENTRATION OF REACTOR WATER
pH OF REACTOR WATER
TEMPERATURE OF REACTOR WATER
SHUTDOWN OPERATION
RATED OPERATION
START-UP OPERATION
OPERATING TIME/OPERATING CYCLE (%)
0
100
100
50
0
TEMPERATURE OF REACTOR WATER, POWER OF REACTOR (%)
9
pH
8
2
1
0
HYDROGEN CONCENTRATION (RELATIVE VALUE)

FIG. 5

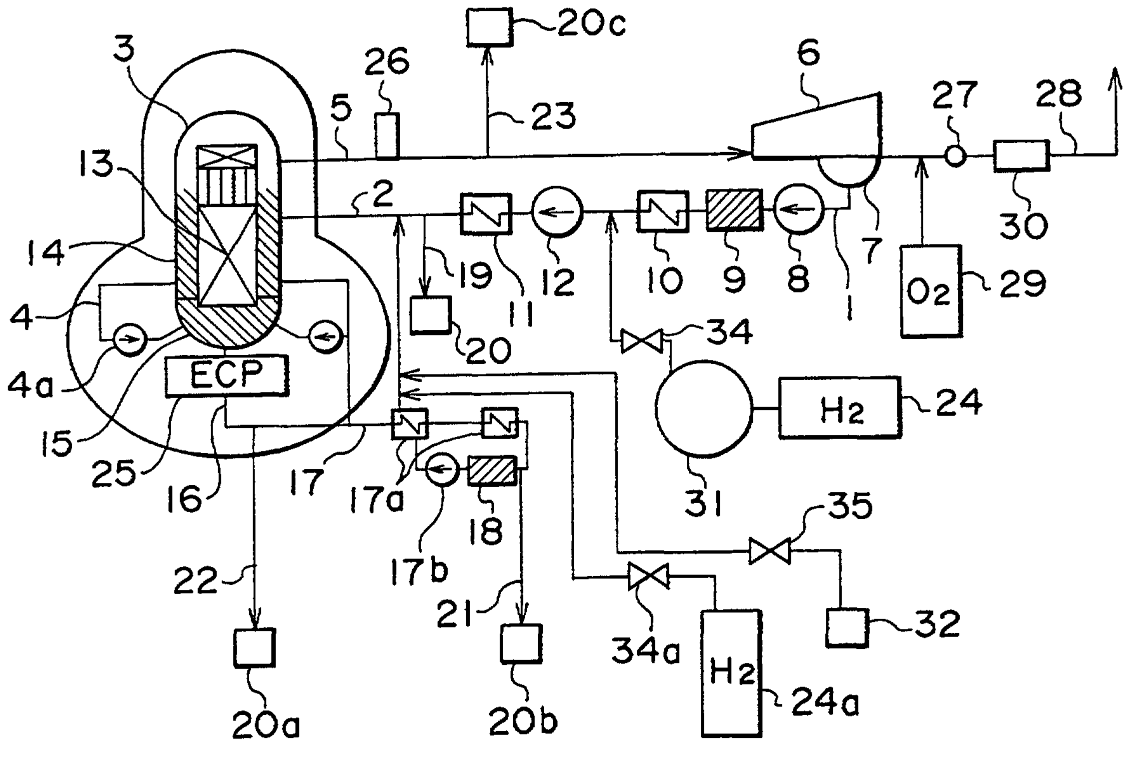
3
26
20c
6
5
23
27
28
13
2
14
19
11
12
10
9
8
1
7
30
4
O2
29
4a
ECP
20
34
H2
24
15
25
16
17
17a
18
31
35
22
17b
21
34a
H2
24a
32
20a
20b

FIG.6

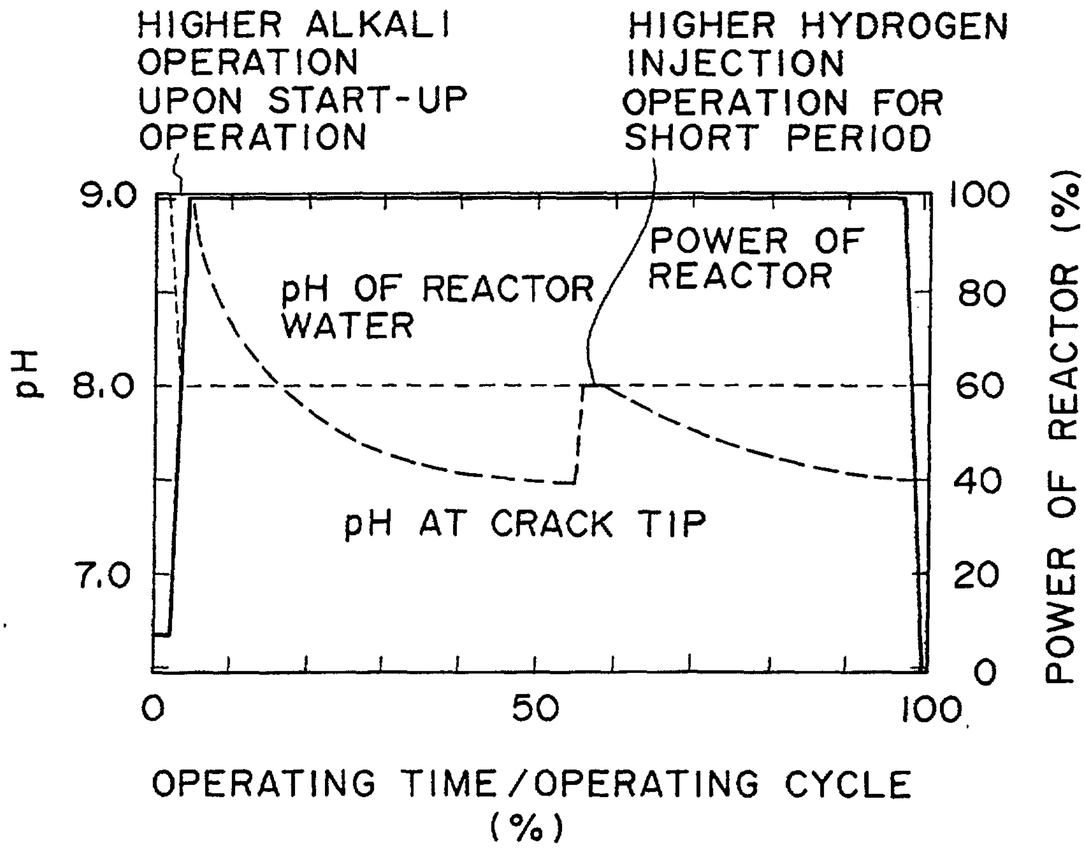
HIGHER ALKALI OPERATION UPON START-UP OPERATION
HIGHER HYDROGEN INJECTION OPERATION FOR SHORT PERIOD
9.0
8.0
7.0
pH
100
80
60
40
20
0
POWER OF REACTOR (%)
POWER OF REACTOR
pH OF REACTOR WATER
pH AT CRACK TIP
0
50
100
OPERATING TIME/OPERATING CYCLE (%)

FIG. 7

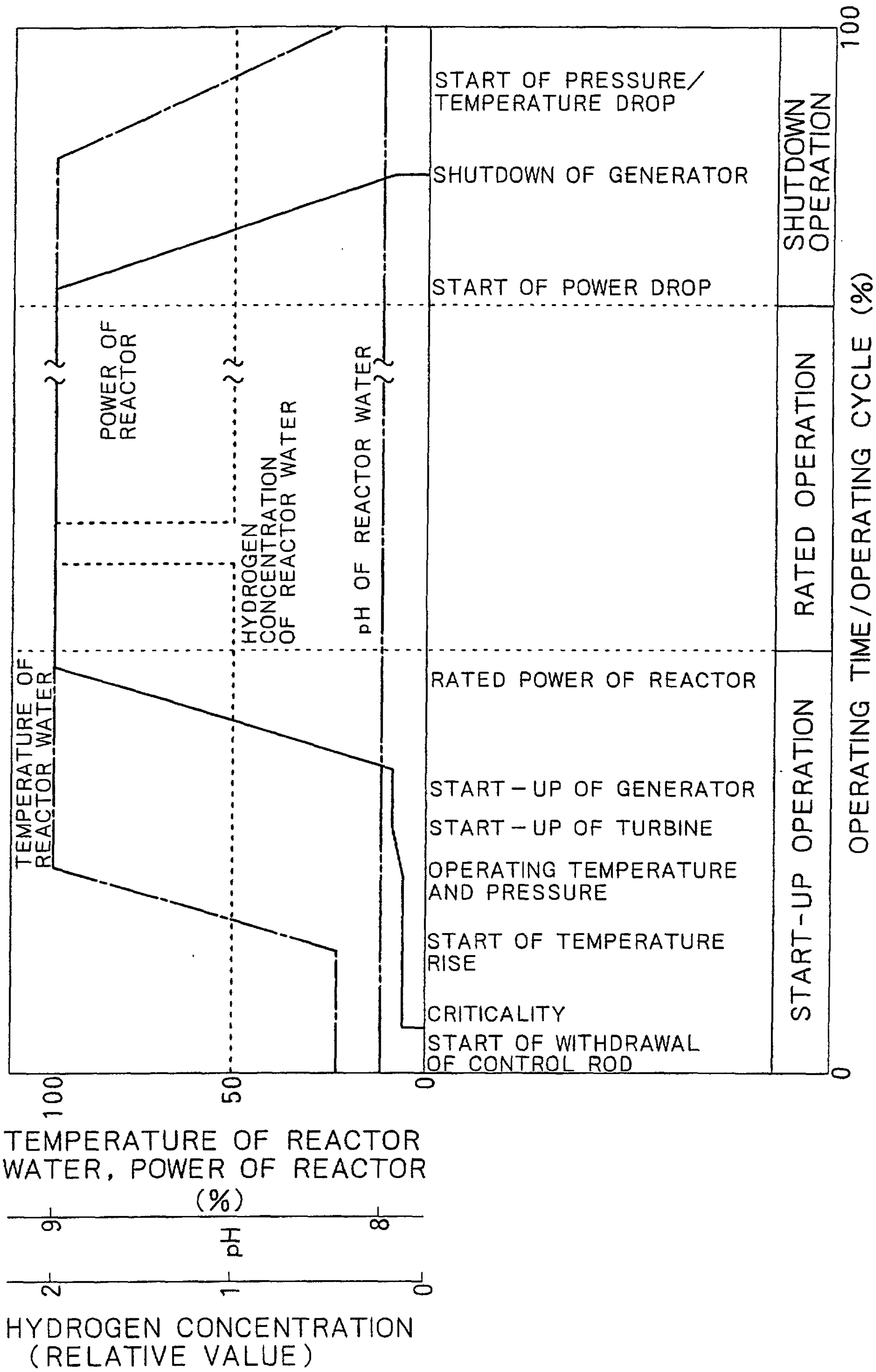
START OF PRESSURE/
TEMPERATURE DROP
SHUTDOWN OF GENERATOR
START OF POWER DROP
RATED POWER OF REACTOR
START-UP OF GENERATOR
START-UP OF TURBINE
OPERATING TEMPERATURE
AND PRESSURE
START OF TEMPERATURE
RISE
CRITICALITY
START OF WITHDRAWAL
OF CONTROL ROD
SHUTDOWN
OPERATION
RATED OPERATION
START-UP OPERATION
OPERATING TIME/OPERATING CYCLE (%)
0
100
POWER OF
REACTOR
HYDROGEN
CONCENTRATION
OF REACTOR WATER
pH OF REACTOR WATER
TEMPERATURE OF
REACTOR WATER
100
50
0
TEMPERATURE OF REACTOR
WATER, POWER OF REACTOR
(%)
9
8
pH
2
1
0
HYDROGEN CONCENTRATION
(RELATIVE VALUE)

FIG.8

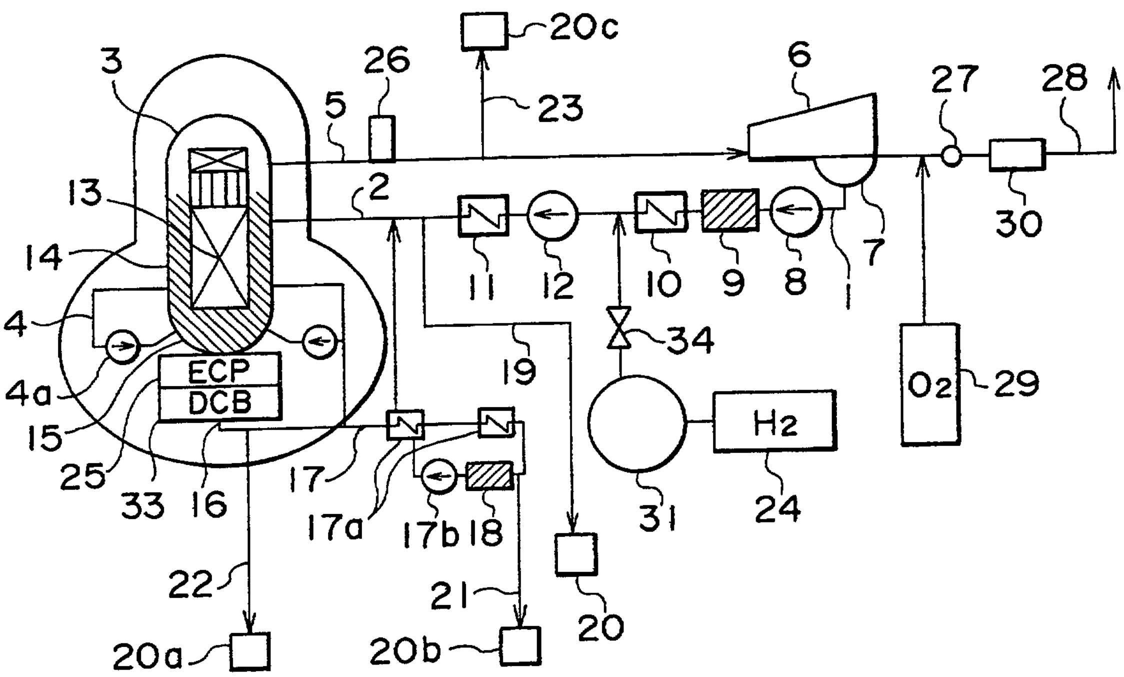
20c
26
3
5
23
6
27
28
13
2
14
11
12
10
9
8
1
7
30
4
ECP
DCB
19
34
4a
15
25
33
16
17
17a
17b
18
31
H2
24
O2
29
22
21
20
20a
20b

FIG.9

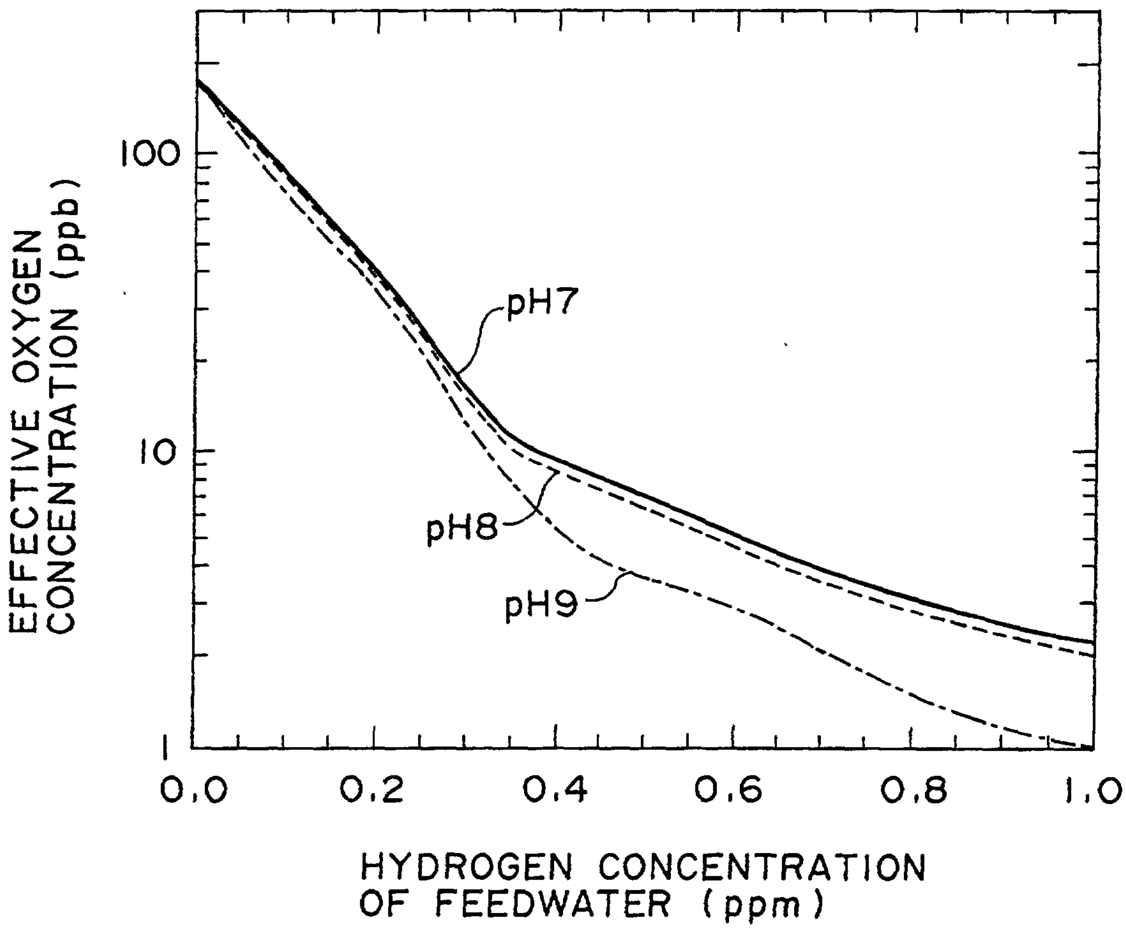
EFFECTIVE OXYGEN CONCENTRATION (ppb)
100
10
1
pH7
pH8
pH9
0.0
0.2
0.4
0.6
0.8
1.0
HYDROGEN CONCENTRATION OF FEEDWATER (ppm)

FIG.10

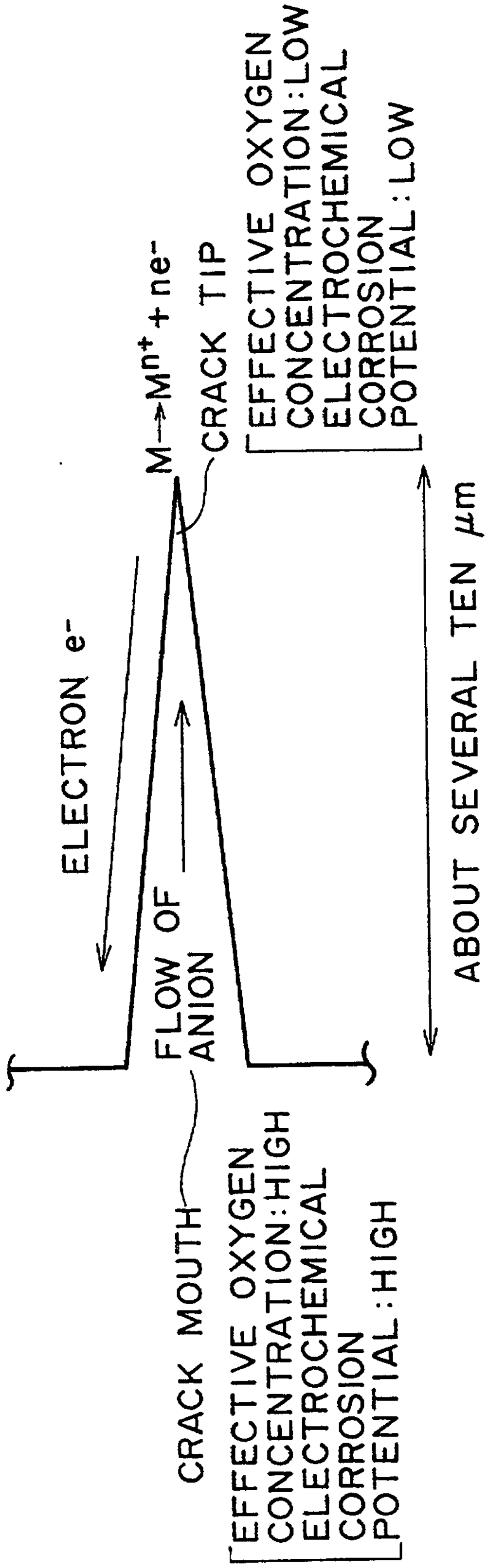
M→$M^{n+}$ + $ne^-$
CRACK TIP
EFFECTIVE OXYGEN CONCENTRATION: LOW
ELECTROCHEMICAL CORROSION POTENTIAL: LOW
ELECTRON $e^-$
FLOW OF ANION
ABOUT SEVERAL TEN μm
CRACK MOUTH
EFFECTIVE OXYGEN CONCENTRATION: HIGH
ELECTROCHEMICAL CORROSION POTENTIAL: HIGH

# FIG.11

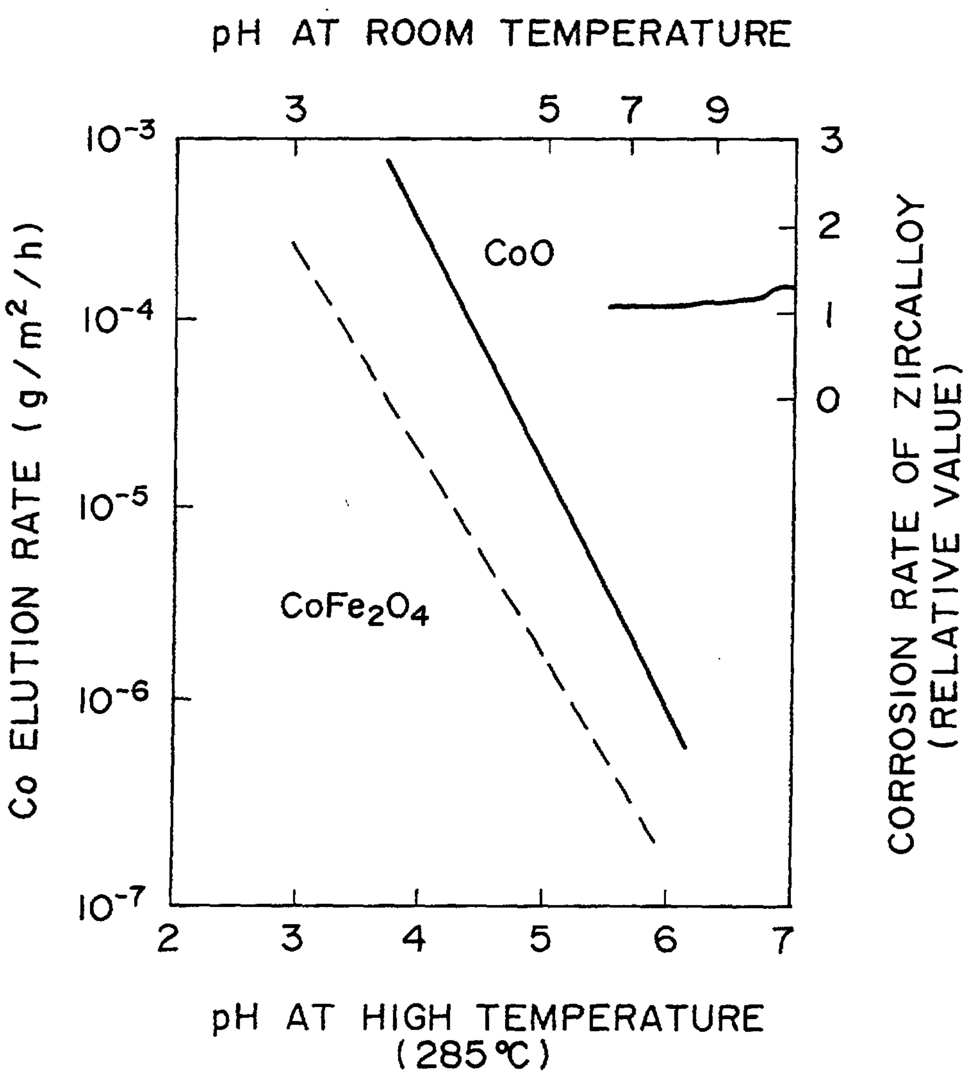
pH AT ROOM TEMPERATURE
3
5
7
9
$10^{-3}$
$10^{-4}$
$10^{-5}$
$10^{-6}$
$10^{-7}$
Co ELUTION RATE ( g / m² / h )
3
2
1
0
CORROSION RATE OF ZIRCALLOY (RELATIVE VALUE)
CoO
CoFe₂O₄
2
3
4
5
6
7
pH AT HIGH TEMPERATURE (285℃)

## INTERNATIONAL SEARCH REPORT

International application No.
PCT/JP99/01560

A. CLASSIFICATION OF SUBJECT MATTER
Int.Cl[6] G21D3/08, G21D1/00

According to International Patent Classification (IPC) or to both national classification and IPC

B. FIELDS SEARCHED

Minimum documentation searched (classification system followed by classification symbols)
Int.Cl[6] G21D3/08, G21D1/00

Documentation searched other than minimum documentation to the extent that such documents are included in the fields searched

| | | | |
|---|---|---|---|
| Jitsuyo Shinan Koho | 1940-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)
JOIS (JICST), [Keisuiro*Suikagaku*Fushoku]

C. DOCUMENTS CONSIDERED TO BE RELEVANT

| Category* | Citation of document, with indication, where appropriate, of the relevant passages | Relevant to claim No. |
|---|---|---|
| Y | JP, 7-287094, A (Hitachi,Ltd.), 31 October, 1995 (31. 10. 95), Full text ; Figs. 1 to 8 (Family: none) | 1-10 |
| Y | JP, 4-274800, A (Hitachi,Ltd.), 30 September, 1992 (30. 09. 92), Full text ; Figs. 1 to 5 (Family: none) | 1-10 |
| Y | Kenkichi Sekisen, et al., "Genshiryoku hatsuden plant no suikagaku kanri no jisseki to shourai tembou", p.898-906, particularly refer to p.902, Journal of the Atomic Energy Society of Japan, Vol. 37, No. 10, October 1995 (Tokyo) | 1-10 |
| Y | JP, 10-90485, A (Hitachi,Ltd.), 10 April, 1998 (10. 04. 98), Full text ; Figs. 1 to 8 (Family: none) | 1-4<br>6-10 |
| Y | JP, 2-222893, A (Toshiba Corp.), 5 September, 1990 (05. 09. 90), Full text ; Figs. 1 to 3 (Family: none) | 1-4<br>6-10 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 April, 1999 (16. 04. 99) | 27 April, 1999 (27. 04. 99) |
| Name and mailing address of the ISA/ Japanese Patent Office | Authorized officer |
| Facsimile No. | Telephone No. |

Form PCT/ISA/210 (second sheet) (July 1992)

INTERNATIONAL SEARCH REPORT

International application No.
PCT/JP99/01560

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 6-58903, A (Hitachi,Ltd.), 4 March, 1994 (04. 03. 94), Par. Nos. [0048] to [0052] ; Figs. 7 to 11 (Family: none) | 2<br>5-8<br>10 |
| A | Hiroyuki Nagao, et al., "Special issue keisuiro hatsuden plant no suikagaku gijutsu IV. Youso gijutsu no kaihatsu IV-1 BWR no suikagaku", p.23-26, particularly refer to p.24-26, Journal of the Atomic Energy Society of Japan, Vol. 34, No. 1, January 1992 (Tokyo) | 1-10 |
| A | JP, 8-297195, A (Hitachi,Ltd.), 12 November, 1996 (12. 11. 96), Full text ; Figs. 1 to 5 (Family: none) | 1-10 |

Form PCT/ISA/210 (continuation of second sheet) (July 1992)